# EUROPEAN PATENT APPLICATION

(11) **EP 1 698 575 A1**
(43) Date of publication of application: **06.09.2006**
(21) Application number: 05105331.2
(22) Date of filing: 16.06.2005
(51) Int. Cl.: B65G 49/06

(54) **Apparatus for picking up and conveying sheet-like products accomodated in a storage unit**

(30) Priority: 01.03.2005 IT PD20050055
(71) Applicant: Piazza, Antonio, 36015 Schio (Vicenza) (IT)
(72) Inventor: Piazza, Antonio, 36015 Schio (Vicenza) (IT)
(74) Representative: Modiano, Micaela Nadia

(57) **Abstract**

An apparatus for picking up and conveying sheet-like products, particularly but not exclusively for storage units which perform a perpendicular translational motion, constituted by a wheeled and motorized structure (11) that can slide on rails (12), to which a supporting and movement arm (13) for a grip assembly (14) for a sheet-like product (15) is hinged by way of articulation means (16); the articulation means (16) are suitable to turn the arm (13) from a central configuration to lateral inclined configurations and vice versa, in order to arrange the grip assembly (14) in front of an inclined frame for sheet-like products (15), and to return the arm (13) and the grip assembly (14) to the central configuration.

## Description

The present invention relates to an apparatus for picking up and conveying sheet-like products accommodated in a storage unit.

The invention is used in particular with sheet-like products such as large glass panes and the like accommodated in storage units particularly but not exclusively of the type with inclined frames and perpendicular translational motion.

Various handling lines or machines for conveying sheet-like products, such as glass panes and the like, from a storage unit to an area for easy handling and vice versa are currently known.

The storage units used to store glass panes generally have a plurality of inclined parallel frames, which are arranged in a storage area; among these frames, for example, frames having a perpendicular translational motion are known.

During pick-up, the panes are carried from such storage units to an easy handling area or directly to an area for working the panes.

For example, a machine for picking up and loading sheet-like products is known which is arranged laterally adjacent to a storage unit with inclined frames and supports a wheeled portal, which can travel on horizontal guides with the aid of motor means and rack-and-pinion systems in a direction that is parallel to the direction of the extension of the storage unit.

A supporting beam is provided on the upper part of the portal and protrudes from at least one side of the portal at right angles to the direction of translational motion of the portal, substantially so as to cantilever out with respect to the portal, so as to lie above the frames of the storage unit.

A grip assembly for the sheet-like products is arranged slidingly on the supporting beam and is generally constituted by a flat frame provided with suckers which hangs, by way of the interposition of oscillating means, from a motorized slider for translational motion along the beam.

A table with rollers for supporting the sheet-like products taken from the storage unit is associated with said wheeled and motorized portal.

The table is coupled to the wheeled portal by way of additional oscillation means, which are suitable to move it from a first substantially horizontal configuration to a second inclined configuration, which is substantially parallel to the flat frame provided with suckers.

The operation of the machine is simple: the portal is moved until it arrives at the inclined frame where the sheet-like product to be picked up is stored.

At this point, the slider of the grip assembly is activated so as to produce the translational motion of the sucker-fitted frame until it lies in front of the sheet to be picked up.

The sucker-fitted frame is tilted, by way of said oscillation means, by the amount needed to arrange it parallel to the sheet to be picked up and is then made to adhere to the sheet.

The grip assembly then returns to a central position in order to release the sheet onto the roller table, which is raised by means of the additional oscillation means facing the sheet.

The table is provided with support and sliding rollers for the movement of the sheet that rests thereon.

At this point, the table is lowered, returning the sheet to a horizontal position; here the sheet can be worked, if cutting means or means suitable to perform other work are associated with the table, or can be easily handled, by way of the support and sliding rollers, which are turned by an associated motor drive, which is suitable to turn at least some of the cylindrical bars that support the rollers.

This type of machine, while being widespread and extensively appreciated commercially because of its excellent features of reliability and practicality, has limitations in use.

The sheet storage unit with inclined frames is in fact often installed, for layout reasons, around vertically extended elements, such as for example structural pillars of the industrial building or other similar enclosed space, columns of scaffolds or machines, hanging structures and the like.

In these situations, therefore, the cantilever portion of the supporting beam of the slider must be fitted with an extension slider which retracts and extends in order to move around structural pillars, columns and the like.

Therefore, these known machines are flexible and adaptable to storage units of various sizes but to the detriment of a structure which as a whole is complicated due to the many functionally connected elements that constitute it (wheeled and motorized portal, likewise motorized grip assembly, oscillating table for supporting the sheets) and is heavy due to the mass of metallic material of which the wheeled portal is constituted and which said portal must bear (beam, slider, flat sucker-fitted frame, et cetera).

The aim of the present invention is to provide an apparatus for picking up and conveying sheet-like products accommodated in a storage unit which solves the problems of known types of machine.

Within this aim, an object of the present invention is to provide an apparatus for picking up and conveying sheet-like products accommodated in a storage unit which is lighter and more compact than known machines and is not less flexible and versatile in use.

Another object of the present invention is to provide an apparatus for picking up and conveying sheet-like products accommodated in a storage unit which is capable of automating the operations for loading and unloading said sheet-like products even when the frames of the storage unit are arranged mutually very close along the direction of advancement of the apparatus or generally in an awkward position.

Another object of the present invention is to provide an apparatus for picking up and conveying sheet-like products accommodated in a storage unit which is independent of the structures of the enclosed space in which it is installed.

Another object of the present invention is to provide an apparatus for picking up and conveying sheet-like products accommodated in a storage unit which can be managed easily even by an operator who does not have particular prior training.

A further object of the present invention is to provide an apparatus for picking up and conveying sheet-like products accommodated in a storage unit which is not less safe than known types of machine.

A further object of the present invention is to provide an apparatus for picking up and conveying sheet-like products accommodated in a storage unit which can be associated easily with known and already-operating flat-frame storage units, as well as with known and already-operating lines for working sheet-like products.

A still further object of the present invention is to provide an apparatus for picking up and conveying sheet-like products accommodated in a storage unit which can be manufactured at low cost with known systems and technologies.

This aim and these and other objects which will become better apparent hereinafter are achieved by an apparatus for picking up and conveying sheet-like products, particularly but not exclusively for storage units which perform a perpendicular translational motion, characterized in that it comprises a wheeled and motorized structure that can slide on rails, to which a supporting and movement arm for a grip assembly for a sheet-like product is hinged by way of articulation means, said articulation means being suitable to turn said arm from a central configuration to lateral inclined configurations and vice versa, in order to arrange the grip assembly in front of an inclined frame for sheet-like products, and to return said arm and the grip assembly to the central configuration.

Further characteristics and advantages of the invention will become better apparent from the following detailed description of a preferred but not exclusive embodiment thereof, illustrated by way of non-limiting example in the accompanying drawings, wherein:
Figure 1 is a perspective view of an apparatus according to the invention in a central configuration;
Figure 2 is a perspective view of an apparatus according to the invention in a working configuration;
Figure 3 is a partially sectional side view of an apparatus according to the invention in the configuration of Figure 2;
Figure 4 is a sectional side view of a detail of an apparatus according to the invention;
Figure 5 is a perspective view of an apparatus according to the invention, provided with a first embodiment of the grip assembly;
Figure 6 is a sectional front view of another detail of an apparatus according to the invention;
Figure 7 is a side view of an apparatus according to the invention, equipped with the first embodiment of the grip assembly;
Figure 8 is a partial side view of an apparatus according to the invention, equipped with a second embodiment of the grip assembly;
Figure 9 is a perspective view of an apparatus according to the invention, provided with a third embodiment of the grip assembly;
Figure 10 is a schematic front view of the apparatus according to the invention in a different embodiment thereof;
Figure 11 is a schematic front view of the apparatus according to the invention in another embodiment;
Figure 12 is a perspective view of the apparatus according to the invention, provided with a fourth embodiment of the grip assembly;
Figure 13 is a perspective view of the apparatus of Figure 12 in the work configuration;
Figure 14 is a schematic top view of the operation of the apparatus of Figures 12 and 13;
Figure 15 is a perspective view of the apparatus according to the invention in another embodiment thereof.

With reference to the figures, an apparatus for picking up and conveying sheet-like products according to the invention is generally designated by the reference numeral 10.

The apparatus 10 is constituted by a wheeled and motorized structure 11, which can slide on rails 12, to which an arm 13 for supporting and moving a grip assembly 14 for a sheet-like product 15 is hinged by way of articulation means 16.

The articulation means 16 turn the arm 13 from a central configuration to lateral inclined configurations and vice versa in order to arrange the grip assembly 14 in front of an inclined frame for sheet-like products 15 and return the arm 13 and the grip assembly 14 to the central configuration.

The apparatus 10 can be installed conveniently in particular but not exclusively in storage units of the type with perpendicular translational motion.

The wheeled and motorized structure 11 is constituted by a first motorized carriage 17, which can slide along the rails 12 and on which a second likewise motorized carriage 18 performs a transverse translational motion.

The articulation means 16 for the arm 13 are associated with the second carriage 18.

The articulation means 16 are constituted by an oscillating base 19, which is pivoted so as to oscillate on two brackets 24, which are rigidly coupled to the second carriage 18.

The base 19 turns about a horizontal oscillation axis 22, which is oriented in the direction of advancement of the first carriage 17.

The base 19 is turned by a first electric gearmotor 20, which is rigidly coupled to the second carriage 18.

The first gearmotor 20 acts by means of a chain drive on a driven gear, which is protected by a housing 21 and is rigidly coupled to the base 19.

The arm 13 is pivoted to the base 19 with an axis 23 which is perpendicular to the oscillation axis 22 of the base 19.

The perpendicular axis 23 is substantially parallel to the plane of arrangement of the base 19.

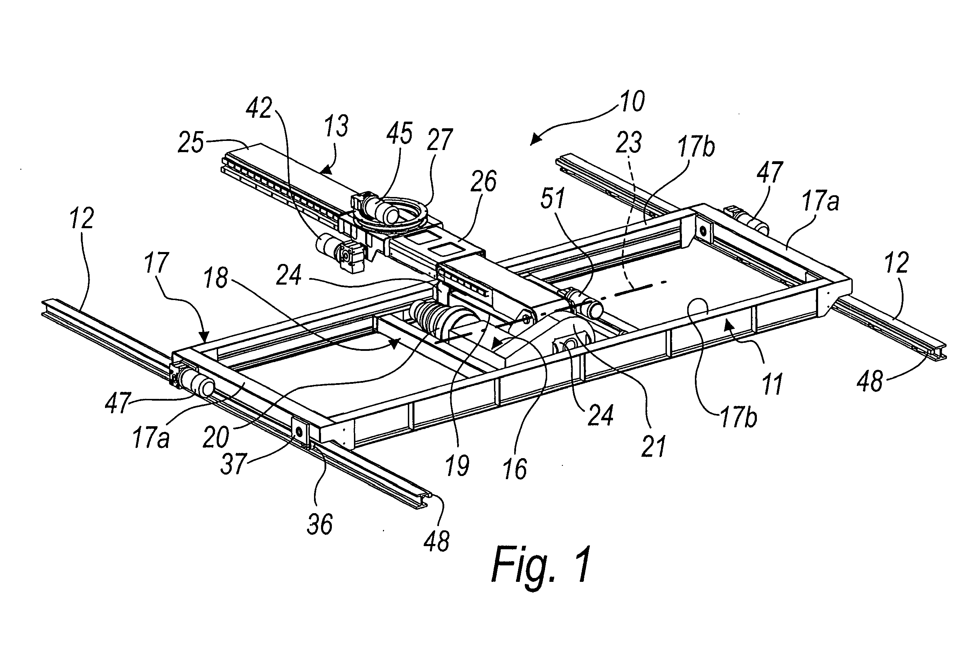

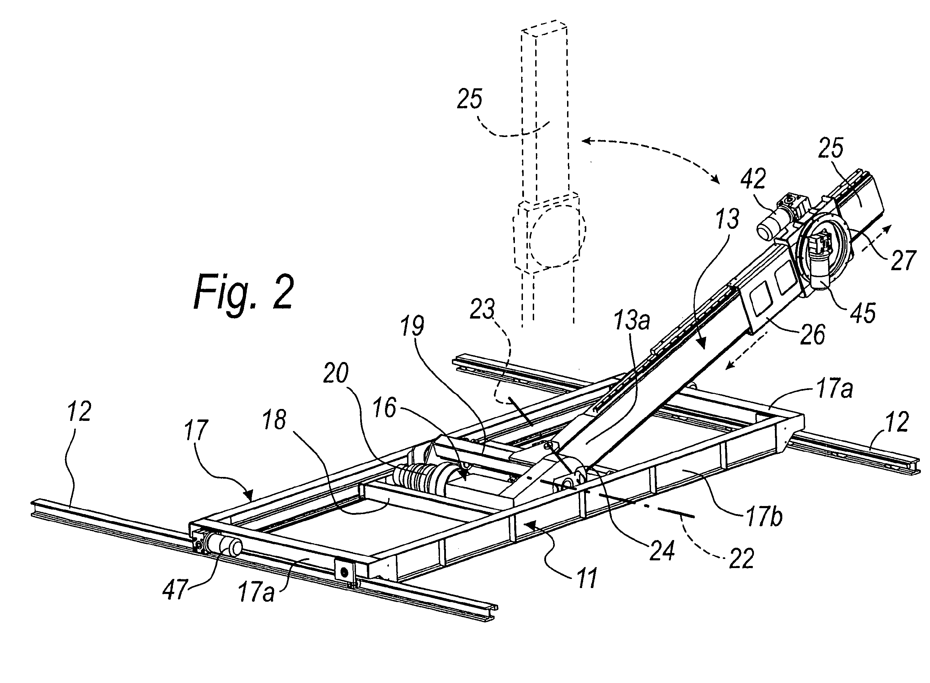

The arm 13 is moved with respect to the perpendicular axis 23 by actuation means for lifting/lowering the arm 13 from a substantially horizontal inactive position, shown in Figure 1, to a substantially vertical position which determines the central configuration, shown in broken lines in Figure 2.

The actuation means for lifting/lowering the arm 13 are constituted by a double-acting piston 41, which is rigidly coupled by means of its body 41a to the oscillating base 19 and by means of its stem 41b to the lower part 13a of the arm 13.

The support and handling arm 13 is constituted by a longitudinally elongated element 25, along which a slider 26 for conveying the grip assembly 14 can slide by way of translational motion means.

The grip assembly 14 is rigidly coupled to the slider 26 by way of the interposition of a center bearing 27, which is suitable to provide a rotation for correcting the configuration of the grip assembly 14, so that such assembly is positioned correctly to grip or release a sheet-like product 15 at the flat frame from which the sheet-like product 15 is to be picked up or onto which it is to be deposited.

The means for the translational motion of the slider 26 on the longitudinal element 25 are constituted by a second gearmotor 42 for the actuation of a pinion, which engages a rack 43, and by two guides 44 on which the slider 26 slides.

The corrective rotation of the center bearing 27 is managed by electronic control means, not shown for the sake of simplicity, which control a third gearmotor 45 by means of appropriate software.

The third gearmotor 45 forces the part of the center bearing 27 to which the grip assembly 14 is fixed to rotate proportionally to the lateral inclination that the arm 13 assumes by means of the first gearmotor 20, so that the grip assembly 14 maintains a substantially constant configuration with respect to the ground, thus preventing the unit 14 from striking the ground.

The first motorized carriage 17 is constituted by a rectangular frame composed of lateral metallic profiles 17a and transverse metallic profiles 17b.

The lateral profiles 17a are for example of the C-shaped type and support the wheels 35, which can slide on the rails 12, of the first carriage 17.

A fourth gearmotor 47 is associated with each one of the lateral profiles 17a.

The two fourth gearmotors 47 move the first carriage 17 back and forth along the rails 12, each acting on a respective pinion, which in turn is engaged with a corresponding rack 48.

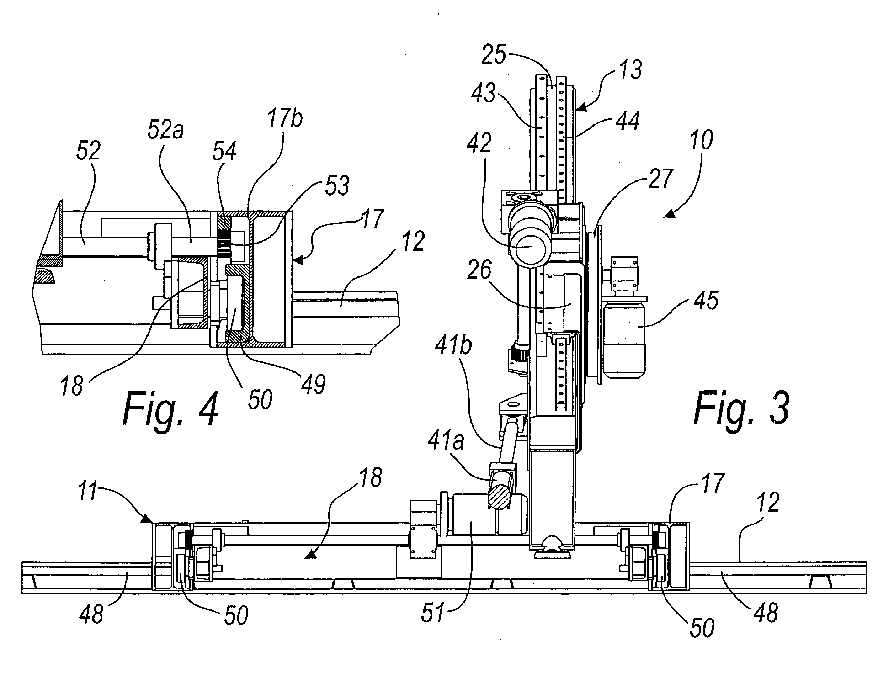

The transverse profiles 17b have for example a double-T cross-section, as shown in Figure 4, but can also be of the C-shaped type.

An internal profile 49 having a C-shaped cross-section is fixed inside the transverse profiles 17b, and the wheels 50 of the second carriage 18 slide therein.

The second motorized carriage 18 is likewise a rectangular frame composed of metallic profiles, which have for example a C-shaped cross-section.

The second carriage 18 slides, with its wheels 50, within the first carriage 17, moved by a fifth gearmotor 51.

The fifth gearmotor 51 acts on a transmission shaft 52.

A pinion 53 is keyed to each of the ends 52a of the shaft 52 and meshes with a corresponding rack 54, which protrudes from a wing of the transverse profile 17b of the first carriage 17.

The operation of the apparatus 10 is as follows.

The fourth gearmotors 47 move, by actuating a pinion for engaging the corresponding rack 48, the first carriage 17 on the rails 12, so as to perform a translational motion up to an inclined frame of a storage unit for sheet-like products (for example of the type with perpendicular translational motion), on which a product 15 to be picked up is arranged.

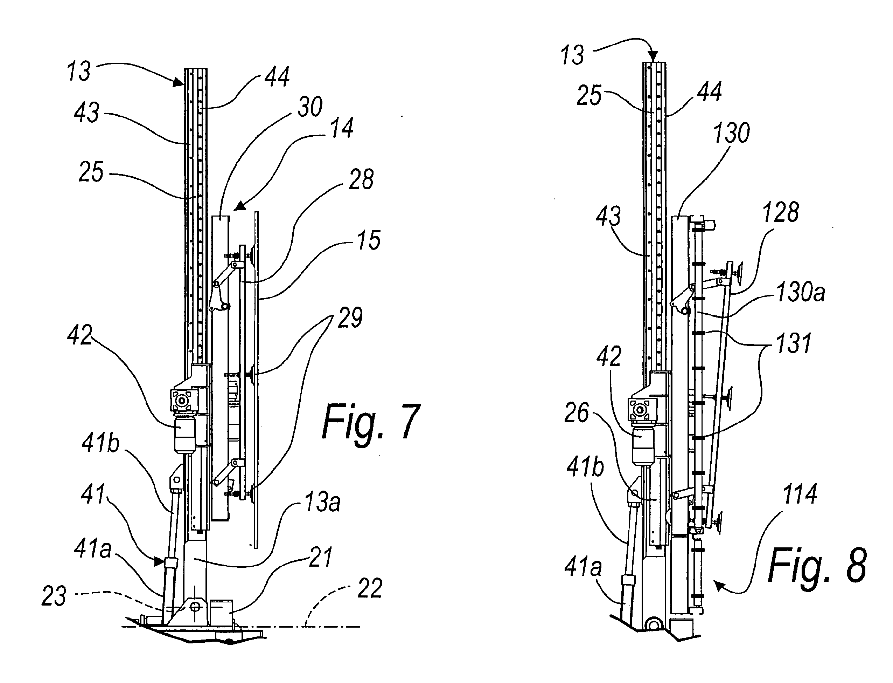

When the first carriage 17 is in position, the arm 13 moves from a horizontal configuration, shown in Figure 1, to a substantially vertical configuration, shown in Figure 2 and clearly illustrated in the side view of Figure 7, by way of the action of the double-acting piston 41.

From the vertical configuration, the arm 13 is then inclined laterally on one side or, in an equivalent manner, on the opposite side, depending on the position of the frame with the product 15 to be picked up.

Such lateral tilting motion allows the arm 13 to make the grip assembly 14 pass between two consecutive frames of the storage unit.

Lateral inclination is controlled by the first gearmotor 20, which acts on the base 19 to which the arm 13 is pivoted.

While the arm 13 tilts, the electronic control means that manage the apparatus activate the second gearmotor 42 so that the slider 26 rises towards the apex of the longitudinal element 25 for vertical positioning of the grip assembly 14.

At the same time, the third gearmotor 45 is actuated in order to turn the center bearing 27.

This rotation, as mentioned, allows the grip assembly 14 to maintain a constant configuration during the rotary motion for lateral inclination of the arm 13.

Such configuration conveniently is the one that is substantially perpendicular to the ground, so that the grip assembly 14 does not strike the ground with any of its parts.

If the frame to be reached is particularly distant from the rails 12, the fifth gearmotor 51 of the second carriage 18 is activated so that it performs a lateral translational motion in the direction of the side on which the arm 13 is tilted.

The piston 41 is capable of lifting the arm 13 from a horizontal position to an angle of even more than 90°, if said angle is needed in order to allow the grip assembly 14 to act in the best way.

In the apparatus 10 described here, the arm 13 can tilt forward by approximately 5° beyond perpendicularity with respect to the ground.

Once the grip assembly 14 has been arranged in the appropriate configuration for picking up the sheet-like product 15, the assembly 14, described in greater detail hereinafter, grips the product 15.

Once the product 15 has been picked up, the arm 13 is returned to a vertical position, the second carriage 18 is arranged again in the central position, if it had performed a translational motion previously, and the piston 41 retracts, arranging the arm 13, the grip assembly 14 and the product 15 in a horizontal configuration.

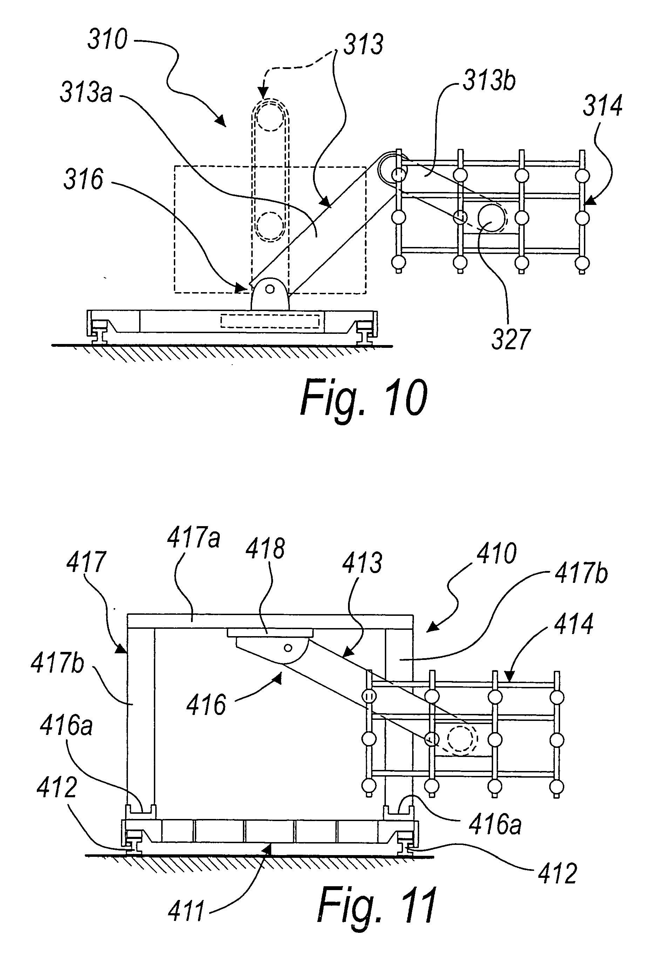

In a constructive variation of the apparatus according to the invention, shown schematically by the front view of Figure 10 and designated therein by the reference numeral 310, the arm 313 is of the articulated type.

The arm 313 is constituted by a rocker element 313a, which is rigidly coupled at one end to the articulation means 316 and at the opposite end to a linkage 313b, which supports the grip assembly 314 by interposition of a center bearing 327 for correcting the configuration of the grip assembly 314.

The arm 313 can thus extend laterally into a grip configuration from a folded central configuration.

In another embodiment of the apparatus according to the invention, shown schematically by the front view of Figure 11 and designated therein by the reference numeral 410, the wheeled and motorized structure 411 is constituted by a motorized portal 417, which can slide along the rails 412.

A likewise motorized slider 418 performs a transverse translational motion on the beam element 417a of the portal 417 and supports the articulation means 416 for the arm 413 for supporting the grip assembly 414.

The arm 413 therefore extends downward and the portal 417 has, at the base of its posts 417b, pivoting means 416a, which allow the portal to move from the vertical configuration to a horizontal configuration.

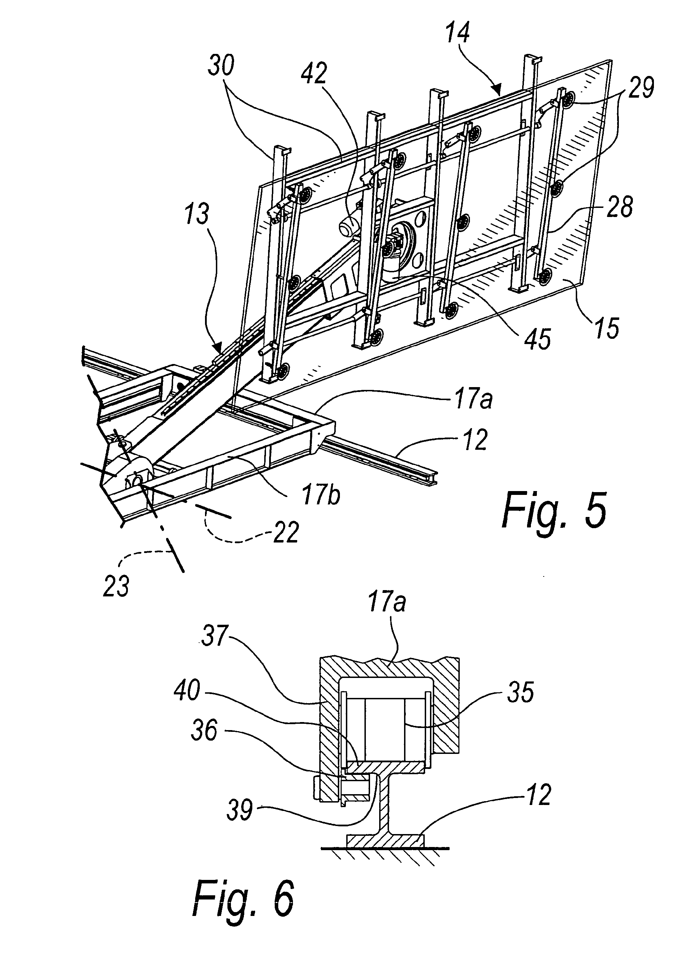

The grip assembly 14 is of the type with suckers 29. In a first embodiment, shown in Figures 5 and 7, the grip assembly 14 of the apparatus according to the invention is constituted by a flat frame 30, of a per se known type, in which the suckers 29 are supported by bars 28 which can be moved by way of actuation means away from and toward the flat frame 30.

The grip assembly 14 can be provided with magnetic devices for gripping metallic sheet-like products, such as metal sheets, rolled sheets and the like, or products that are made at least partially of metallic material.

In a second embodiment thereof, shown by the side view of Figure 8, the grip assembly, designated here by the reference numeral 114, is constituted by a flat frame 130 with movable sucker-supporting bars 128, and is provided with rollers 131 for the support and translational motion of the loaded sheet-like product 115.

The rollers 131 are rigidly coupled to bars 130a, to which they are fixed and together with which they are turned by a per se known motor drive, which is not illustrated for the sake of simplicity.

The set of bars 130a forms a second frame, which is rigidly coupled so as to be superimposed on the frame 130, so that the movable sucker supporting bars 128 are arranged between two consecutive bars 130a.

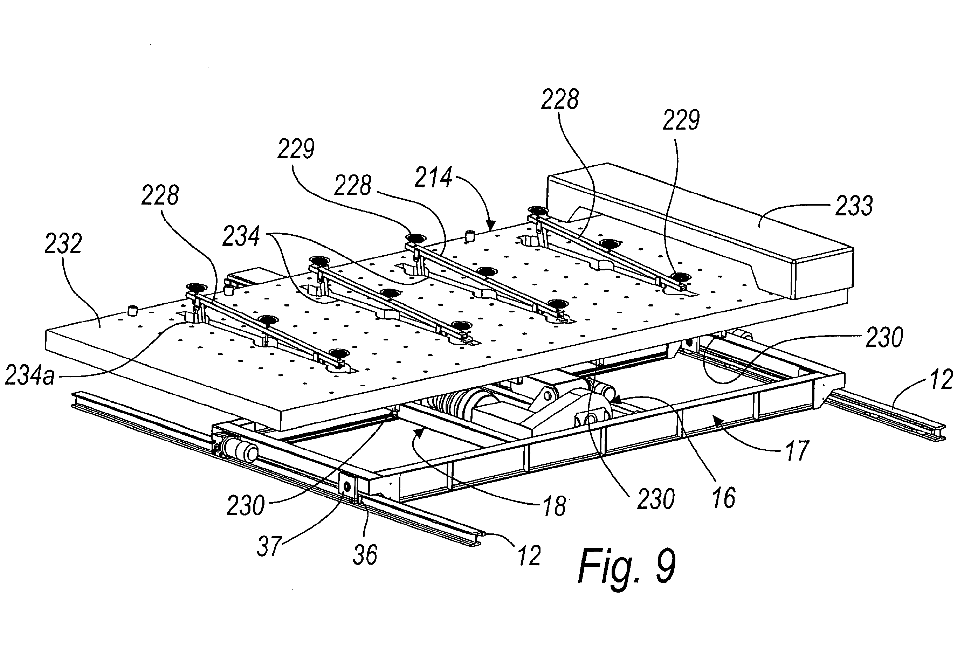

In a third embodiment, shown by the perspective view of Figure 9, the grip assembly, here designated by the reference numeral 214, is formed by a worktable 232 provided with working means 233 for the loaded sheet-like product.

The worktable 232 is fixed to an underlying frame 230, which supports it, and is provided with slots 234, from which sucker supporting bars 228 protrude which can move away and toward the worktable 232 in order to grip the sheet-like product to be loaded.

Recesses 234a are formed laterally with respect to the slots 234 for the sucker supporting bars 228 on the worktable 232, and the suckers 229 retract into the recesses.

The working means 233 are constituted for example by a cutting portal, which is suitable to slide over the sheet-like product deposited on the worktable 232.

The grip assembly 214, which includes the worktable 232 and the working means 233 for the loaded sheet-like product, has the great advantage of being able not only to pick up the sheet-like product from the storage unit by means of the suckers 229 and the movable bars 228 that support them, but also of working the sheet-like product during travel from the storage unit to the subsequent area to which the product is directed, increasing as a whole the speed of the production cycle, from which it is possible to eliminate the passage of the sheet-like product through the appropriately provided fixed working equipment.

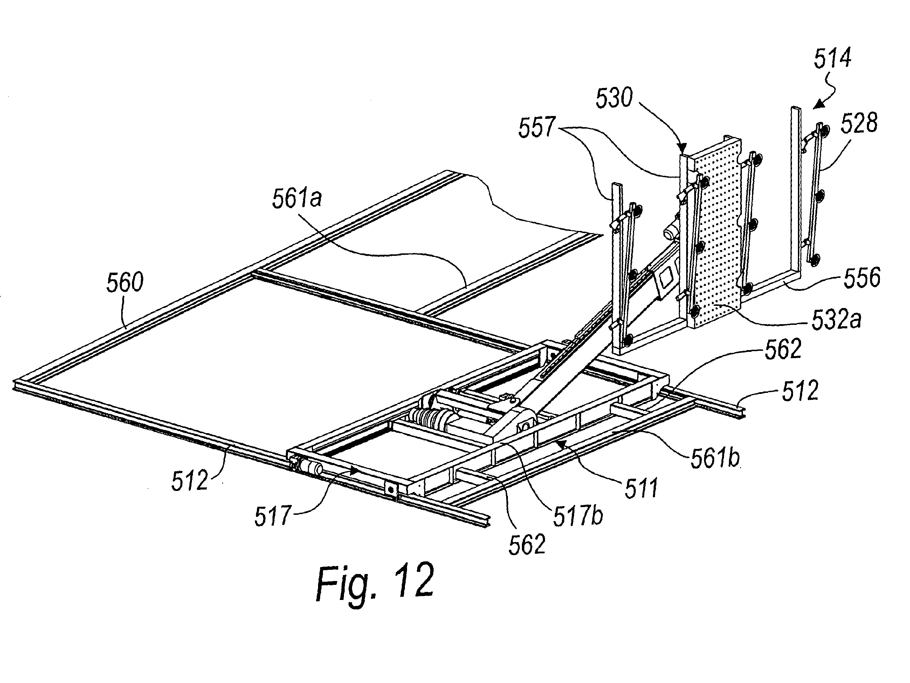

In a fourth embodiment, illustrated by the perspective view of Figure 12, the grip assembly, here designated by the reference numeral 514, is formed, in a manner similar to what has been described for its preceding embodiments, by a flat frame 530, with sucker supporting arms 528 and suckers 529.

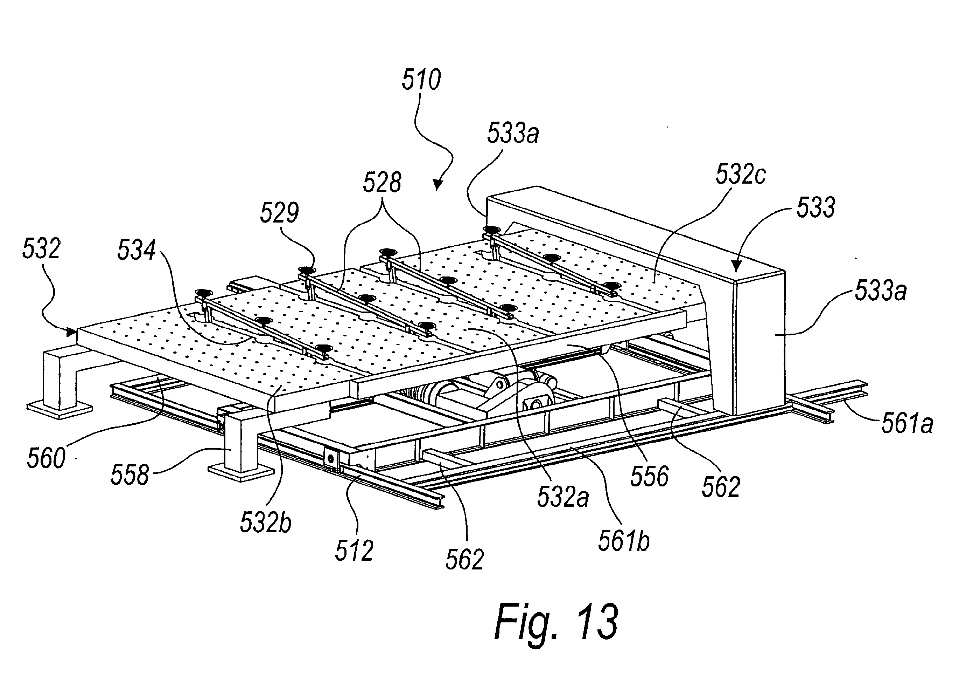

In this fourth embodiment, the frame 530 comprises a central portion 532a of a worktable 532, the remaining side portions 532b and 532c of which are arranged in an end area of the path traced by the rails 512, as shown in Figure 13.

The frame 530 is constituted by a lower beam 556 and by four equidistant posts 557, which protrude from the beam 556, to which the sucker supporting bars 528 are rigidly coupled.

The two central posts 557 are mutually connected by a plate-like element for connection to the center bearing 27, not shown in Figure 12, and the central portion 532a of the worktable 532 is fixed thereto.

Such rake-like configuration of the frame 530 allows the wheeled structure 511 with the grip assembly 514 in the horizontal configuration to slide along the rails 512 so that the bars 528 each enter the corresponding slot 534, the slots being open in the direction from which the wheeled structure 511 arrives indeed in order to allow the access of the bars 528.

The lateral portions 532b and 532c of the worktable 532 are each supported by two ground supports 558, which are sized so as to support in a cantilever fashion the corresponding lateral portion 532b or 532c, and are shaped so as to not interfere with the insertion of the frame 530.

The grip assembly 514, once arranged below the two lateral portions 532b and 532c, with the central portion 532a aligned with them, completes the worktable 532, on which it is possible to rest the sheet-like product carried by the grip assembly 514.

Once the sucker supporting bars 528 have been retracted into the slots 534, the sheet-like product rests on the worktable 532 for working.

Working means 533 for the sheet-like product placed on the worktable 532 are provided at the end area at the end of the path formed by the rails 512.

The working means 533 are constituted by a cutting portal, in which the legs 533a are suitable to slide along a pair of guides which lie transversely with respect to the direction of the rails 512.

A first guide 560 is arranged at the end of the rails 512 and the second guide is formed by two parts 561a and 561b.

The first guide 560 is provided with a rack, not shown for the sake of simplicity, with which the pinion of a gearmotor 564 for moving the working means 533 engages.

A first part 561 a of the second guide is rigidly coupled to the ground and is therefore fixed proximate to the first guide 560, while the second part 561b is rigidly coupled to the transverse profile 517b of the first carriage 517 by way of two connecting elements 562.

The apparatus 510 further comprises anti-tip means for coupling to at least one of the two guides, the first guide 560 and the second guide 561a and 561b.

The anti-tip means are shown schematically in Figure 6 and are similar to the anti-tip means for coupling the wheeled structure 11 to the rails 12, described in greater detail hereinafter.

The anti-tip means may also be different in terms of structure but substantially equivalent to the ones described in greater detail hereinafter.

The length of the connecting elements 562 is such that when the central portion 532a is aligned with the lateral portions 532b and 532c of the worktable 532, the second part 561b is aligned with the first part 561a.

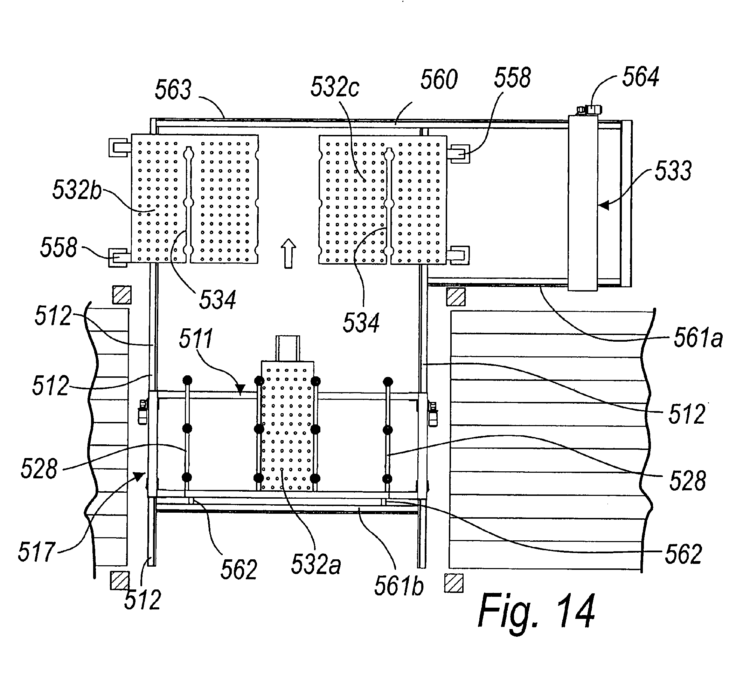

In this configuration of the apparatus 510, shown in Figure 13, the working means 533, which in the standby configuration are parked outside the rails 512 on the first part 561a of the second guide and on the corresponding portion of the first guide 560 (as shown schematically in Figure 14), can perform freely a translational motion on the two transverse guides and work on the worktable 532.

In this embodiment, the apparatus 510 allows to convey easily a sheet-like product and to work it immediately in the end area of the path of the rails without having to transfer it elsewhere, with great advantages in terms of storage unit layout.

The apparatus 10 is also provided with anti-tip means for coupling to the rails 12.

These per se known anti-tip means are formed by the wheels 35, which can slide above the rails 12 having a double T-shaped transverse cross-section, and by anti-tip wheels 36, which are pivoted to a bracket 37 which protrudes downward from the lateral profiles 17a of the wheeled structure 11.

The anti-tip wheels 36 are arranged so as to slide on the internal face 39, which is undercut, of one of the upper wings 40 which form the double T-shaped cross-section of the rails 12.

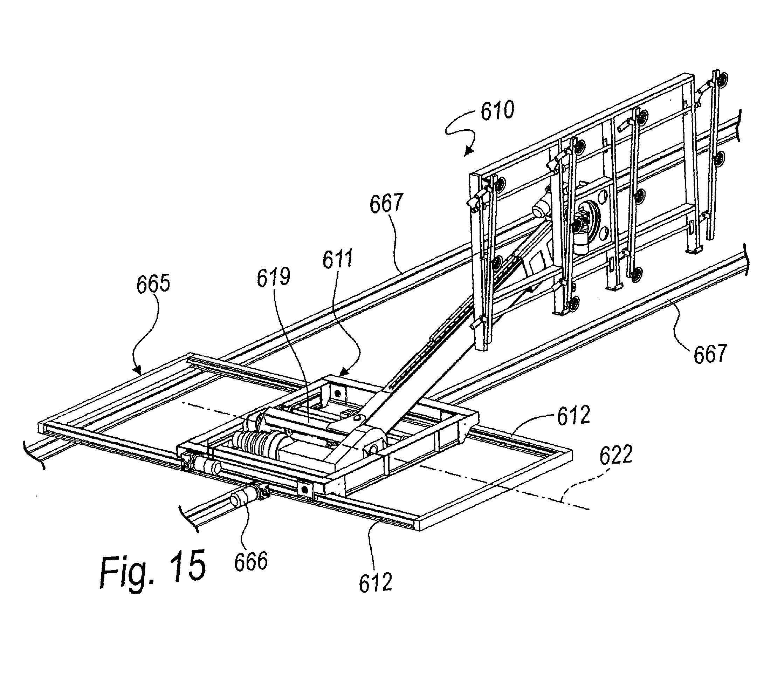

Figure 15 illustrates another embodiment of the apparatus according to the invention, designated therein by the reference numeral 610.

The apparatus 610 is characterized in that the wheeled and motorized structure 611 is suitable to slide, in the direction of the oscillation axis 622 of the base 619, on two first rails 612, which are part of a frame 665, which in turn is provided with motorization means 666 (for example an electric gearmotor) for movement on two second rails 667 arranged transversely with respect to the first rails 612.

The apparatus 610 allows to pick up a sheet-like product from an inclined frame or from a workstation and move it to another inclined frame or to another workstation arranged laterally to the preceding one.

The frame 665 of the apparatus 610 also is coupled to the rails 667 with anti-tip means which are entirely similar to the ones described above.

The apparatus 10 according to the invention, with its flat carriages 17 and 18, is much lighter than known machines constituted by a wheeled portal for supporting a beam which protrudes laterally until it affects at least one frame of the storage unit.

The apparatus 10, without a portal and a beam, can be installed even in industrial buildings (or similar enclosed spaces) which have closely spaced structural column-like elements, since the absence of cantilever beams reduces the total surface occupation of the apparatus 10 in the configuration for advancement to the footprint of the first carriage 17 alone.

Further, the apparatus 10 according to the invention can easily serve frames arranged on its right side as well as frames arranged on its left side, without having to add any extension component of any kind.

The apparatus 10 according to the invention, in addition to being lighter, is therefore less expensive, as it is constituted by a smaller volume of metallic material.

The apparatus 10, by not being extended vertically, is therefore also safer.

In practice it has been found that the invention thus described solves the problems noted in known machines and in known handling lines for the conveyance of sheet-like products, such as glass panes and the like, from a storage unit to an area for easy handling and vice versa.

In particular, the present invention provides an apparatus for picking up and conveying sheet-like products accommodated in a storage unit, which is lighter and more compact than known machines and is not less flexible and versatile in use.

Moreover, the present invention provides an apparatus for picking up and conveying sheet-like products accommodated in a storage unit which is capable of automating the operations for loading and unloading said sheet-like products even when the frames of the storage unit are arranged very close to each other along the advancement direction of the apparatus or generically in an awkward position.

Further, the present invention provides an apparatus for picking up and conveying sheet-like products accommodated in a storage unit which is independent of the column-like structures of the enclosed space in which it is installed.

Moreover, the present invention provides an apparatus for picking up and conveying sheet-like products accommodated in a storage unit which can be managed no less easily than known machines even by an operator who has no particular prior training.

Further, the present invention provides an apparatus for picking up and conveying sheet-like products accommodated in a storage unit which is not less safe than known types of machine.

Moreover, the present invention provides an apparatus for picking up and conveying sheet-like products accommodated in a storage unit which can be manufactured cheaply with known systems and technologies.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to the requirements and the state of the art.

The disclosures in Italian Patent Application No. PD2005A000055, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus for picking up and conveying sheet-like products, particularly but not exclusively for storage units which perform a perpendicular translational motion, **characterized in that** it comprises a wheeled and motorized structure (11) that can slide on rails (12), to which a supporting and movement arm (13) for a grip assembly (14) for a sheet-like product (15) is hinged by way of articulation means (16), said articulation means (16) being suitable to turn said arm (13) from a central configuration to lateral inclined configurations and vice versa, in order to arrange the grip assembly (14) in front of an inclined frame for sheet-like products (15), and to return said arm (13) and the grip assembly (14) to the central configuration.

2. The apparatus according to claim 1, **characterized in that** said wheeled and motorized structure (11) is constituted by a first motorized carriage (17), which can slide along the rails (12), a second likewise motorized carriage (18) performing a translational motion transversely on said first carriage (17), said articulation means (16) for the arm (13) for supporting the grip unit (14) being associated with the second carriage (18).

3. The apparatus according to one or more of the preceding claims, **characterized in that** said articulation means (16) are constituted by an oscillating base (19), which is pivoted so as to oscillate on two brackets (24), which are rigidly coupled to said second carriage (18) about a horizontal oscillation axis (22), which is oriented in the direction of advancement of said first carriage (17), said base (19) being turned by an electric gearmotor (20), which is rigidly coupled to the second carriage (18) and acts by means of a chain drive on a driven gear (21), which is rigidly coupled to said base (19), said arm (13) being pivoted to the base (19) with an axis (23) which is perpendicular to the oscillation axis (22) of said base (19) and is substantially parallel to the plane of arrangement of the base (19), said arm (13) being moved with respect to said perpendicular axis (23) by actuation means for lifting/lowering the arm (13) from a substantially horizontal inactive position to a substantially vertical position which determines said central configuration.

4. The apparatus according to claim 3, **characterized in that** said actuation means for lifting/lowering the arm (13) are constituted by a piston (41), which is rigidly coupled with its body (41a) to the oscillating base (19) and with its stem (4 1 b) to the lower part (13 a) of the arm (13).

5. The apparatus according to one or more of the preceding claims, **characterized in that** said supporting and movement arm (13) is constituted by a longitudinally elongated element (25), on which a slider (26) for conveying the grip assembly (14) can slide by way of translational motion means, said assembly being rigidly coupled to said slider (26) by way of the interposition of a center bearing (27), which is suitable to rotate for correcting the configuration of the grip assembly (14), so that said assembly is arranged correctly for picking up or releasing a sheet-like product (15) at the flat frame from which said sheet-like product (15) is to be picked up or onto which it is to be deposited.

6. The apparatus according to one or more of claims 1 to 3, **characterized in that** said arm (313) is articulated, since it is constituted by a rocker element (313a), which is rigidly coupled at one end to the articulation means (316) and at the opposite end to a linkage (313b) which supports said grip assembly (314) by way of the interposition of a center bearing (327) for correcting the configuration of said grip assembly (314), said arm (313) being able to unfold laterally from a folded central configuration to a grip configuration.

7. The apparatus according to one or more of the preceding claims, **characterized in that** said grip assembly (14) is of the type with suckers (29).

8. The apparatus according to one or more of claims 1 to 6, **characterized in that** said grip assembly (14) is provided with magnetic devices for picking up the sheet-like products.

9. The apparatus according to one or more of the preceding claims, **characterized in that** said grip assembly (14) is constituted by a flat frame (30), in which the suckers (29) are supported by bars (28), which can be moved by way of actuation means away from/toward the flat frame (30).

10. The apparatus according to claims 1 to 8, **characterized in that** said grip assembly (114) is constituted by a flat frame (130) with movable sucker supporting bars (128) and is provided with rollers (131) for supporting and performing the translational motion of said loaded sheet-like product.

11. The apparatus according to one or more of claims 1 to 8, **characterized in that** said grip assembly (214) is formed by a worktable (232) provided with working means (233) for the loaded sheet-like product, said worktable (232) being fixed to an underlying frame (230) which supports it and being provided with slots (234) from which sucker supporting bars (228) protrude which can move away from/toward the worktable (232) in order to grip the sheet-like product to be loaded.

12. The apparatus according to claim 11, **characterized in that** recesses (234a) are formed on the worktable (232) laterally to the slots (234) for the sucker supporting bars (228), the suckers (229) retracting into said recesses.

13. The apparatus according to claims 11 and 12, **characterized in that** said working means (233) are constituted by a cutting portal, which is suitable to slide over the sheet-like product deposited onto the worktable (232).

14. The apparatus according to one or more of claims 1 to 9, **characterized in that** said grip assembly (514) is formed by a flat frame (530), with sucker supporting bars (528) and suckers (529), which comprises a central portion (532a) of a worktable (532), the remaining lateral portions (532b, 532c) of said worktable (532) being arranged in a terminal area of the path outlined by the rails (S12).

15. The apparatus according to claim 14, **characterized in that** said frame (530) is constituted by a lower beam (556) and by equidistant uprights (557), which protrude from said beam (556), to which the sucker supporting bars (528) are rigidly coupled.

16. The apparatus according to claims 14 and 15, **characterized in that** the two central posts (557) are mutually connected by a plate-like element for connection to the center bearing (27), and the central portion (532a) of the worktable (532) is fixed thereto.

17. The apparatus according to claims 14 to 16, **characterized in that** said frame (530) has a rake-like configuration, such that the wheeled structure (511) with the grip assembly (514) in the horizontal configuration is suitable to slide on the rails (512) so that the sucker supporting bars (528) each enter the corresponding slot (534), said slots being open in the direction from which the wheeled structure (511) arrives.

18. The apparatus according to claims 14 to 17, **characterized in that** said lateral portions (532b, 532c) of the worktable (532) are each supported by at least one ground support element (558), which is sized so as to support in a cantilever fashion the corresponding lateral portion (532b, 532c) and are contoured so as to not interfere with the insertion of the frame (530).

19. The apparatus according to claims 14 to 18, **characterized in that** said grip assembly (514), arranged below the two lateral portions (532b, 532c) of the worktable (532) with the central portion (532a) aligned with said portions, completes the worktable (532), on which it is possible to rest the sheet-like product conveyed by said grip assembly (514).

20. The apparatus according to claims 14 to 19, **characterized in that** at the end area, at the end of the path traced by the rails (512), there are means (533) for working the sheet-like product arranged on the worktable (532).

21. The apparatus according to claim 20, **characterized in that** said working means (533) are constituted by a cutting portal, in which the legs (533a) are suitable to slide on two guides (560, 561a, 561b), which lie transversely with respect to the direction of the rails (512).

22. The apparatus according to claim 21, **characterized in that** a first guide (560) of said two transverse guides is provided with a rack, with which the pinion of a gearmotor (564) for moving the working means (533) engages, and is arranged at the end of the rails (512), while the second guide is formed by two parts (561a, 561b), the first one (561a) of said parts being rigidly coupled to the ground proximate to the first guide (560), the second part (561b) being rigidly coupled to the rear transverse profile (517b) of the first carriage (517) by way of two connecting elements (562).

23. The apparatus according to claim 22, **characterized in that** the length of the connecting elements (562) is such that when the central portion (532a) of the worktable (532) is aligned with the lateral portions (532b, 532c) of said worktable (532), the second part (561b) of the second guide is aligned with its first part (561a).

24. The apparatus according to one or more of claims 14 to 23, **characterized in that** said working means (533) in the standby configuration are parked externally with respect to the rails (512) on the first part (561a) of the second guide and on the corresponding portion of the first guide (560), and when the central portion (532a) of the worktable (532) is aligned with the two lateral portions (532b, 532c) said working means (533) are suitable to perform a translational motion on the two transverse guides (560, 561a, 561b) in order to work on the worktable (532).

25. The apparatus according to one or more of claims 14 to 24, **characterized in that** it comprises anti-tip means for coupling to at least one of the two first (560) and second (561a, 561b) guides.

26. The apparatus according to one or more of the preceding claims, **characterized in that** it has anti-tip means for coupling to the rails (12).

27. The apparatus according to claim 26, **characterized in that** said anti-tip means are formed by wheels (35), which can slide on said rails (12) which have a double T-shaped transverse cross-section, and by anti-tip wheels (36), which are pivoted to a bracket (37) which protrudes downward from the lateral profiles (17a) of the wheeled structure (11) and are arranged so as to slide on the undercut face (39) of one of the upper wings (40) which form the double-T cross-section of said rails (12).

28. The apparatus according to one or more of claims 1 and 3 to 27, **characterized in that** said wheeled and motorized structure (411) is constituted by a motorized portal (417), which can slide on the rails (412), on the beam element (417a), of which it moves transversely a likewise motorized slider (418), which supports said articulation means (416) for the arm (413) and is extended downward, for supporting the grip assembly (414).

29. The apparatus according to one or more of the preceding claims, **characterized in that** said wheeled and motorized structure (611) is suitable to slide, in the direction of the oscillations axis (622) of the base (619), on two first rails (612), which are part of a frame (665), which in turn is provided with motorization means (666) for movement on second rails (667) arranged transversely with respect to said first rails (612).

30. The apparatus according to claim 29, **characterized in that** said frame (665) is rigidly coupled to the second rails (667) by way of anti-tip means.
